# EUROPEAN PATENT SPECIFICATION

(11) **EP 2 902 752 B1**
(45) Date of publication and mention of the grant of the patent: **07.06.2023**
(21) Application number: 15152098.8
(22) Date of filing: 22.01.2015
(51) Int. Cl.: G01G 19/04, G01G 23/00, G01G 23/37

(54) **Railway Freight car on-board weighing system**
Wägesystem an Bord eines Eisenbahngüterwagens
Système de pesage embarqué de wagon ferroviaire à marchandises

(30) Priority: 31.01.2014 US 201414169784
(43) Date of publication of application: 05.08.2015
(73) Proprietor: Amsted Rail Company, Inc., Chicago, IL 60606 (US)
(72) Inventor: Maraini, Dan, Broonmall, PA 19008 (US)
(74) Representative: Dehns

(56) References cited:
- EP-A1- 2 679 967
- US-B1- 8 227 713

## Description

### BACKGROUND OF THE INVENTION

The present invention relates to railcar weighing systems and, more particularly, to on board railcar weighing systems.

It is desirable to be able to obtain the weight of loading in a railway freight car or tank car. It is especially desirable to be able to obtain the weight of loading in a railway freight car or tank car on a real time basis, without need for the railcar to be in a specific location, such as a scale.

It is also desirable to be able to transmit a signal indicative of the weight of loading in the railcar or tank car to a bolster wherein such signal can be stored.

US-8227713 discloses a railcar weighing system where one or more sensors mounted on the railcar sense the effect of weight of the railcar and transmit the data to a user. EP-2679967 discloses a device for measuring and displaying the payload of a rail vehicle.

Accordingly, it is an object of the present invention to provide a method and apparatus for measuring the weight of loading in a railway freight car or tank car and to transmit a signal indicative of such weight to a receiver.

### SUMMARY OF THE INVENTION

A system for measuring the load of a railway car is provided as claimed in claim 1. This invention covers several embodiments of a system for measuring the static or dynamic load of a railway car. In one embodiment, displacement/strain type transducers are mounted symmetrically to the bolsters of the trucks supporting the railway car body. In this embodiment, the lateral and longitudinal load imbalances are measured, in addition to the weight of the railway car body. Wireless sensors are used to read and transmit the output of the transducers. The readings are sent to either a local receiver, or a remote location.

### BRIEF DESCRIPTION OF THE DRAWINGS

FIG. 1 is an illustration of a typical three-piece truck assembly consisting of a bolster, side frames, axles, spring groups, and side bearings.
FIG. 2 is an illustration of an embodiment of the invention with the sensors/transducers symmetrically mounted on the bolster of the railway car truck.
FIG. 3 is an illustration of a detail of the embodiment in FIG. 2 showing the transducer and sensing element.
FIG. 4 is an illustration of another embodiment of the invention with the sensors/transducers symmetrically mounted on the side frame of the railway car truck.
FIG. 5 is an illustration of a detail of the embodiment in FIG. 3 showing the transducer and sensor.
FIG. 6 is an illustration of an embodiment of the elastic element portion of the transducer.
FIG. 7 is a schematic of the data flow from transducers to a remote receiver.

### DETAILED DESCRIPTION OF THE INVENTION

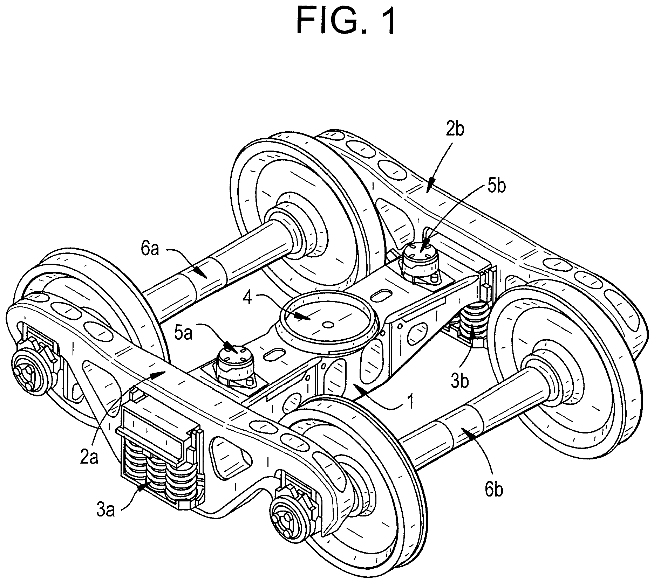

A general three piece truck system is shown in FIG. **1****.** This includes a bolster **1** which extends between the openings of two laterally spaced side frames **2**a and **2**b. The bolster **1** is supported at its ends with load spring groups **3**a and **3**b. The bolster **1** includes a center plate **4** and laterally spaced side bearings **5**a and **5**b for supporting the railway car body weight. Axle assemblies **6**a and **6**b extend laterally between the side frames **2**a and **2**b.

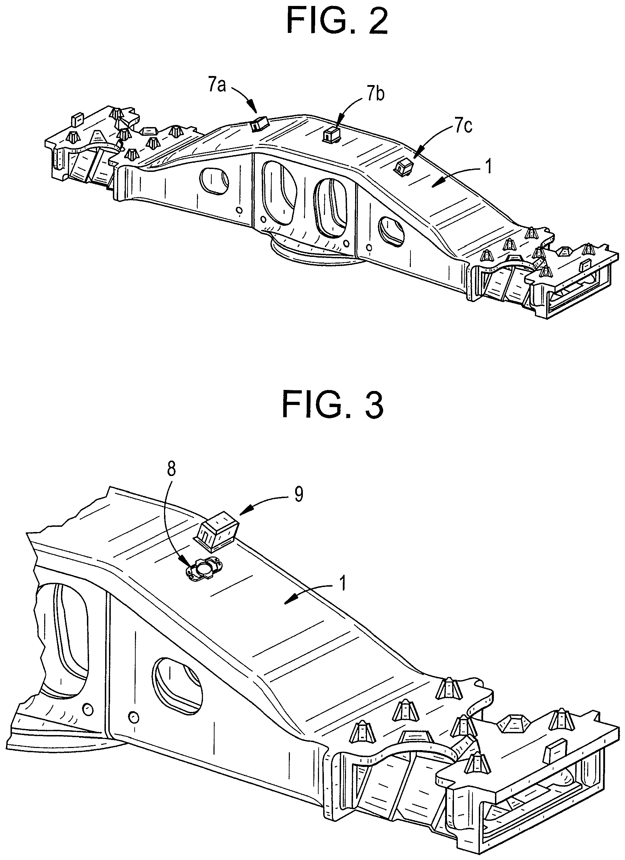

The first embodiment of the invention is shown in FIG. **2**, including a three-piece truck bolster **1** and wireless strain/displacement sensors **7**a - **7**c. The sensors **7**a - **7**c are mounted to the bolster 1 in locations selected using analytical/numerical stress analysis techniques. Additionally, areas identified using computational techniques are verified using experimental stress analysis, which may include the use of strain gages and/or displacement transducers. Locations are also chosen such that hot-work from welding or similar techniques remains within accepted zones as specified by the Association for American Railroads (AAR). In the preferred arrangement, two sensors **7** are mounted to the diagonal tension member of the bolster **1** as shown in FIG. **1**, although a variety of other mounting configurations are possible.

Each wireless strain/displacement sensor **7** includes a strain/displacement transducer **8** and wireless sensing unit **9** as shown in FIG. **3****.** In the preferred embodiment, the strain/displacement transducers **8** are rigidly attached to the bolster **1** using shielded metal arc welding (SMAW), although the strain/displacement transducers **8** may also be attached using adhesives. The use of a welded joint provides the most direct transfer of strain/displacement from the casting to the transducer **8** and minimizes errors associated with non-linearity, hysteresis, and zero-balance drift. The transducers **8** produce an electrical output that is proportional to the displacement/strain on the bolster **1** mounting surface. This principle applies to all other embodiments of the invention, and is used as an example in this case.

The wireless sensing unit **9** interfaces directly with the transducer **8** with the primary function of reading and digitizing the output signal from the transducer **8.** In the preferred embodiment, the wireless sensing unit **9** contains a microprocessor unit with associated analog-to-digital (A/D) convertors and signal conditioning, a power source, and a communications unit in the form of a wireless transmitter/receiver. The wireless sensing unit **9** may also contain additional sensing elements including inertial, temperature, or pressure sensors. These additional sensors may be used for logic and decision making on the integrity of transducer **8** data. For example, transducer **8** signals collected outside of the operating temperature limits of the transducer may be discarded using logic within the wireless sensing unit **9.** The wireless sensing units **9** communicate with a local communications manager **15** which will be described hereafter.

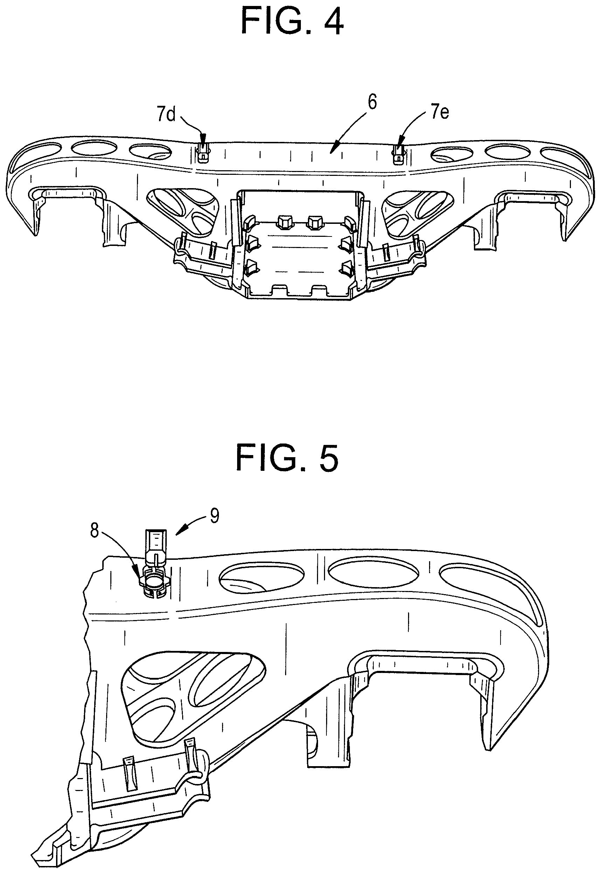

A second embodiment of the invention is shown in FIGS. **4** and **5**, including a three-piece truck side frame **6**, and laterally spaced wireless transducer assemblies 7d - 7e, each consisting of a strain/displacement transducer **8** and wireless sensing unit **9.** This embodiment operates on the same principles described for the first embodiment in FIG. **2**, with the primary difference of wireless sensor **7** locations. These are the preferred embodiments of the invention, but wireless sensor **7** location and quantity is not limited to those discussed herein and are used as examples only. In the most general sense, sensors **7** can be located anywhere on the railway vehicle that exhibit changes in stress/strain/displacement in response to an applied load.

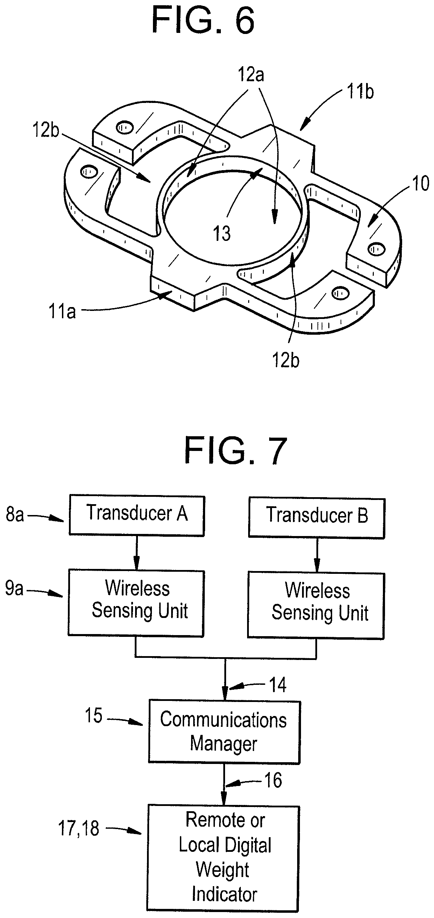

FIG. **6** illustrates a general overview of the displacement/strain transducer structure for example only. The transducer **8** includes an elastic element **10** (preferably stainless steel) with the primary purpose of transmitting displacement/strain from the tabs **11**a - **11**b to a portion of the elastic element wherein strain gages **12**a - **12**b are mounted. Secondly, the elastic element **10** is designed such that the input displacement/strain at the tabs **11**a - **11**b is mechanically amplified in the location of the strain gages **12**a - **12**b. In this embodiment, the elastic element **10** is designed for bending with the application of tensile or compressive strain/displacement on the tabs **11**a - **11**b. This example utilizes four active strain gages in a Wheatstone bridge arrangement, although other elastic element geometries may include more active gages. The transducer **8** produces an electrical output signal that is proportional to both the applied input voltage and strain/displacement input at the tabs **11**a - **11**b. Additionally, the transducer **8** includes a temperature detector **13**, used to measure the elastic element **10** temperature in the location of the strain gages **12**a - **12**b. In the preferred embodiment, the temperature detector **13** is of the form of a surface mount resistance temperature detector (RTD), although similar detectors may be substituted.

The preferred embodiment illustrated in FIG. **6** has been discussed, although other transducers may be used as long as they provide an electrical output that is proportional to the mounting surface strain/displacement. Examples include linear variable differential transformers (LVDT), vibrating wire transducers (VWT), and fiber Bragg grating strain sensors. The discussed principles of operation apply to any of the aforementioned transducer types.

FIG. **7** illustrates the preferred embodiment of the components of the present invention and their interaction. In this embodiment, two wireless strain/displacement sensors **7** are mounted to the bolsters **1** on the diagonal tension members as shown in FIG. **2****.** The output from laterally spaced transducers **8** on a single bolster **1** is sampled and conditioned by the wireless sensing unit **9.** Conditioning includes amplifying the raw signal from the transducer 7, filtering the signal to remove noise, and averaging sets of individual data points to minimize sampling error. The analog-to-digital converter (A/D) converts the conditioned signal into digital form, with resolution at least 1/5 of the system accuracy. The digitized output is then sent wirelessly **14** to a local communications manager **15** (preferably mounted on the railway car body). The manager **15** sums the signals from each pair of sensors **7** and applies a calibration for each truck, using sealed parameters stored in memory in the manager **15.** The calibrated output from each truck is summed and sent wirelessly **16** either to a local digital weight indicator **17**, or remotely to a dedicated computer or workstation **18.** Wireless transmission **16** from the manager **15** to the remote receiver **17 - 18** can be achieved using various methods, and will be discussed in more detail hereafter. In the preferred embodiment, data is transferred wirelessly **16** via Bluetooth to a dedicated digital weight indicator **17.**

As noted previously, the preferred embodiment utilizes sealed calibration parameters in the communications manager **15** to convert the digital sensor data into weight readings. In the present invention, sensors **7** are mounted to structurally supportive areas of the railway car that have been analytically and experimentally proven to react with a high degree of repeatability to an applied load. However, it is recognized that there is an intrinsic variation in the relationship between applied load and strain/displacement that warrants unique calibration of each component. In the preferred embodiment, this necessitates calibrating individual truck assemblies. Calibration of an individual truck assembly can be achieved using a dedicated hydraulic load frame for applying loads to the center plate **4** and side bearings **5**a - **5**b of the bolster **1**, while the truck is supported on rails through the axle assemblies **6**a - **6**b. The preferred method is the adoption of industry accepted calibration routines, such as ASTM E74 - Standard Practice of Calibration of Force-Measuring Instruments for Verifying the Force Indication of Testing Machines. In this preferred method, at least 5 ascending and descending calibration points are used and repeated at least 3 times. The use of such calibration practices ensures the highest degree of accuracy possible in the weight readings for a given truck assembly. By calibrating the truck systems before assembling the railway car, the system will thus measure the railway car body weight, as opposed to the gross rail load (GRL). Alternative methods, including calibration in the field with 1 or 2 calibration points will have significantly lower statistical certainty. However, simplified field calibrations may be used in cases where the highest degree of accuracy is not required. In commercial weighing applications used for custody transfer, evaluation in accordance with a National Type Evaluation Program (NTEP) may be necessary, which requires both laboratory and field verification testing.

The most basic form of transducer data processing has been described with reference to FIG. **7**. It is generally assumed that the methods described are used under static or quasi-static conditions, both of which assume inertial effects of the railway vehicle are negligible. The preferred method for weighing a railway car requires an un-coupled condition, on level track, with the car completely at rest in accordance with the AAR Scales Handbook. However, there are instances where weight readings may be needed when the car is out-of-level or in motion. In these cases, the degree of car motion or out-of-level conditions can be assessed using the aforementioned inertial sensors within the wireless sensing unit **9** or similar sensors in the communications manager **15.** Logic can thus be applied to make decisions regarding the accuracy of the sensor data based on the inertial measurements. For example, an inertial sensor may be used to indicate a rail grade of 5%, and subsequently inhibit the output of sensor readings because they have been deemed inaccurate for the given conditions. Alternatively, correction algorithms could be used to adjust the weight readings based on the degree of out-of-level or motion. Both examples provide a robust weighing solution that is relatively insensitive to conditions.

As static conditions are generally assumed with respect to the motion of the railway car, static environmental conditions are also generally assumed and preferred. However, it is commonly accepted that strain gage based transducers will exhibit some degree of zero-output shift with temperature change. In the preferred embodiment, a temperature detector **13** within the transducer **8** is sampled with each transducer reading in order to apply correction algorithms in the wireless sensing unit **9.** In the simplest form, correction algorithms utilize first-order linear relationships between transducer **8** output and temperature, although higher order fitting may be necessary in some cases. Similar approaches could be used for correction for elevation, or correction of thermal output for different transducer types described previously. The highest degree of correction is achieved by calibrating the entire truck assembly (with sensors) in a thermal chamber or similar fixture. In the preferred embodiment, temperature correction provides the desired system accuracy (say 1% of full-scale) from -10 to 40°C, in accordance with NCWM Publication 14 and NIST Handbook 44.

Both static and weigh-in-motion type weight measurement have been described in previous sections. Additionally, transient forces occurring at the wheel-rail interface are transferred from the axle assemblies **6**a - **6**b into the side frames **2**a - **2**b, through the spring group **3**a **-3**b, and into the bolster **1** during service. Both embodiments of the invention (FIGS. **2** and **3**) incorporate strain/displacement sensors **7** on the side frames **2**a - **2**b and/or bolster **1.** Each embodiment therefore possesses some level of indirect force measurement at the wheel-rail interface. For example, a wheel with a surface defect on the tread in the form of a skid flat may induce periodic transient forces into the truck assembly, which can be measured with the said sensors **7.** Such measurements are comparable to Wheel Impact Load Detectors (WILD), with the added benefit of being incorporated into the railway car. Additionally, forces induced into the truck assembly due to curving, instabilities, or similar conditions could be measured with the sensors **7.**

As noted above, the wireless sensing units **9** transmit and receive data with a communications manager **15** mounted locally on the railway vehicle car body. This short range allows for the use of low-power radios conforming to standards such as IEEE802.15.4, for operation in the 2.4 GHz license-free band. In the preferred embodiment, the sensing units **9** are capable of being wireless routers, communicating with all other sensing units **9** for a redundant communication path to the manager **15.** The manager **15** also continuously monitors and optimizes the network, dynamically changing data paths, and adjusting when sensing units **9** talk, listen, or sleep. Additionally, the preferred embodiment provides end-to-end data security with 128 bit AES-based encryption, or similar methods common to the art. Similar low-power wireless networks can be employed, and data transmission is not limited to the methods discussed herein.

In the preferred embodiment, the communications manager **15** includes a computation element such as a micro-controller, memory, a stand-alone power supply, and sensors. Sensors may include ambient temperature, barometric pressure, proximity, or inertial sensors. Additionally, the manager **15** incorporates several communication methods including the aforementioned wireless sensor network, cellular (GSM/GPRS), satellite, and Bluetooth or WiFi for local communications. The manager **15** may also incorporate a wireless sensing unit **9** for creating a network of managers **15** along the train. With an additional manager **15** in the locomotive or the like, data from all aforementioned sensors can be monitored in the locomotive. Various methods can be used for communications along the train.

The manager **15** also may include a location measurement means such as a global positioning system (GPS). The positioning system can be used to determine railway car speed and location. Both speed and location can be used within algorithms to adjust wireless sensing unit **9** sampling rates, or inhibit data output all-together. For example, the weight of the railway car may not be of interest when being stored in a yard, so the position information could be used to inhibit the sampling and output of weight readings, thus preserving energy on both the communications manager **15** and wireless sensing units **9.** Alternatively, weight readings may be needed every minute while the railway car is being loaded, so it is necessary for the manager **15** to be able to adjust sensor **9** sampling rates based on a combination of parameters and user inputs. In the preferred embodiment, the end user can adjust the sampling rate from a local digital weight indicator **17** as desired, although other autonomous methods may be needed in different environments.

It has been previously noted that the wireless strain/displacement sensors **7** can be used to measure dynamic forces at the rail/wheel interface. When combined with the aforementioned inertial sensor within the manager **15** or wireless sensing unit **9**, an added level confidence is achieved regarding the reported state of the truck system. For example, periodic lateral forces in the bolster **1** may be detected by the sensors **7**, and the associated car body response measured with an inertial sensor may be used to corroborate the event. The relationship between wheel/axle inputs and car body response can be readily determined with both computational and empirical techniques. This information can be used to create transfer functions within the manager **15** or wireless sensing unit **9** to accurately predict inputs.

## Claims

1. A system for measuring the load of a railway car comprising:
a railway car body supported on railway wheels, axles and a plurality of trucks,
each truck comprised of a bolster (1) and two sideframes (2a,2b),
a plurality of transducers (8) mounted to the bolster or the sideframes for measuring the weight supported by the railway car body,
one or more sensor units (9) associated with the transducers (8) for the acquisition, processing, and transmission of processed data from the transducers (8),
a receiver for communication with the sensor units (9) and transmission of the processed data indicative of the weight supported by the railway car body,
wherein the plurality of transducers (8) comprise strain type transducers, and wherein each strain type transducer (8) is rigidly attached to the bolster (1) or to one of the sideframes (2a,2b) through a welded joint, or using adhesives.

2. The system of claim 1, wherein each strain type transducer (8) includes an elastic element (10) that is mechanically joined to one or more of the bolster or the sideframes,
wherein the elastic element mechanically multiplies an input displacement detected at the strain gages.

3. The system of claim 2, wherein the elastic element (10) is designed for bending with the application of tensile or compressive displacement on tabs (11a, 11b) thereof and is arranged to transmit strain from the tabs (11a, 11b) to a portion of the elastic element wherein the strain gages (12a, 12b) are mounted, the elastic element (10) being designed such that the input displacement at the tabs (11a, 11b) is mechanically amplified in the location of the strain gages (12a, 12b)

4. The system in any of claims 1, 2 or 3, wherein each transducer (8) includes a plurality of strain gages preferably arranged in one or more Wheatstone bridge circuits.

5. The system in any preceding claim, wherein the transducers are mounted symmetrically along the lateral or longitudinal direction of the railway car for determining static load imbalances between the wheels, axles, or trucks.

6. The system in any preceding claim, wherein each sensor unit (9) is comprised of:
a computational element for collecting transducer readings;
a memory storage element; and
a wireless transceiver for sending and receiving data.

7. The system of claim 6, wherein each sensor unit (9) further comprises:
a temperature detector for measuring the temperature at the mounting location of the transducers;
a motion detector for the indication of motion of the railway car;
an inertial sensor for the detection of static and dynamic translational and rotational motion of the bolster and the sideframes;
wherein the computational element is preferably used to control the sampling of the transducers and for performing analysis on the transducer readings; and
wherein the memory storage element is preferably used to store the transducer, inertial sensor, or motion detector readings.

8. The system in claim 7, wherein the wireless transceiver communicates with one or more of the temperature detector, the motion detector and the inertial sensor, all of which communicate with the receiver, so that multiple communication paths are open for data transmission.

9. The system in claim 7 or 8, wherein the motion detector is used to determine if the railway vehicle is in motion and to change the transducer readings analysis for static or dynamic conditions.

10. The system in any of claims 7 to 9, wherein the computational element is used to compute the rate of the readings taken from the temperature detector.

11. The system in any of claims 6 to 10, wherein the computational element is used to adjust the transducer readings based on rates and temperature readings.

12. The system in any preceding claim, wherein the receiver comprises:
a data control unit for receiving readings from one or more of the sensors;
a communication element for transmitting data to a remote location,
a computational element for analysing the data received from one or more of the sensors;
a detector for determining the speed of the railway car; and
a positioning element for determining the location of the railway car.

13. The system in claim 12, wherein the data control unit programs computational element on the sensors to control the sampling of the transducers and the rate of which readings shall be transmitted to the receiver.

14. The system in any preceding claim, wherein the transducers are used to measure transient forces occurring at a rail and wheel interface.

## Patentansprüche

1. System zum Messen der Last eines Eisenbahnwagens, umfassend:
einen Eisenbahnwagenaufbau, der auf Eisenbahnrädern, Achsen und einer Vielzahl von Drehgestellen getragen wird,
jedes Drehgestell eine Wiege (1) und zwei Seitenrahmen (2a, 2b) umfasst,
eine Vielzahl von Messwandlern (8), die an der Wiege oder den Seitenrahmen zum Messen des Gewichts, das von dem Eisenbahnwagenaufbau getragen wird, montiert sind,
eine oder mehr Sensoreinheiten (9), die mit den Messwandlern (8) zum Erlangen, Verarbeiten und Übertragen von verarbeiteten Daten von den Messwandlern (8) verknüpft sind,
einen Empfänger zur Kommunikation mit den Sensoreinheiten (9) und zum Übertragen der verarbeiteten Daten, die das Gewicht angeben, das von dem Eisenbahnwagenaufbau getragen wird,
wobei die Vielzahl von Messwandlern (8) Messwandler vom Dehnungstyp umfassen und wobei jeder Messwandler vom Dehnungstyp (8) starr an der Wiege (1) oder an einem der Seitenrahmen (2a, 2b) durch eine Schweißnaht oder mit Hilfe von Klebstoffen befestigt ist.

2. System nach Anspruch 1, wobei jeder Messwandler vom Dehnungstyp (8) ein elastisches Element (10) beinhaltet, das mechanisch mit einem oder mehreren der Wiege oder der Seitenrahmen verbunden ist,
wobei das elastische Element eine Eingangsverschiebung, die an den Dehnungsmessstreifen erfasst wird, mechanisch vervielfacht.

3. System nach Anspruch 2, wobei das elastische Element (10) zum Biegen bei der Anwendung einer Zug- oder Druckverschiebung an seinen Laschen (11a, 11b) gestaltet ist und angeordnet ist, Dehnung von den Laschen (11a, 11b) auf einen Abschnitt des elastischen Elements zu übertragen, in dem die Dehnungsmessstreifen (12a, 12b) montiert sind, wobei das elastische Element (10) so gestaltet ist, dass die Eingangsverschiebung an den Laschen (11a, 11b) an der Stelle der Dehnungsmessstreifen (12a, 12b) mechanisch vergrößert wird.

4. System nach einem der Ansprüche 1, 2 oder 3, wobei jeder Messwandler (8) eine Vielzahl von Dehnungsmessstreifen beinhaltet, die vorzugsweise in einer oder mehreren Wheatstone-Brückenschaltungen angeordnet sind.

5. System nach einem vorstehenden Anspruch, wobei die Messwandler symmetrisch entlang der seitlichen oder Längsrichtung des Eisenbahnwagens montiert sind, um statische Lastungleichgewichte zwischen den Rädern, Achsen oder Drehgestellen zu bestimmen.

6. System nach einem vorstehenden Anspruch, wobei jede Sensoreinheit (9) Folgendes umfasst:
ein Rechenelement zum Sammeln von Messwandlerablesungen;
ein Speicherelement; und
einen drahtlosen Sendeempfänger zum Senden und Empfangen von Daten.

7. System nach Anspruch 6, wobei jede Sensoreinheit (9) weiter Folgendes umfasst:
einen Temperaturdetektor zum Messen der Temperatur an der Montagestelle der Messwandler;
einen Bewegungsdetektor für die Angabe von Bewegung des Eisenbahnwagens;
einen Trägheitssensor zum Erfassen statischer und dynamischer translatorischer und rotatorischer Bewegung der Wiege und der Seitenrahmen;
wobei das Rechenelement vorzugsweise zum Steuern der Abtastung der Messwandler und zum Durchführen einer Analyse an den Messwandlerablesungen verwendet wird; und
wobei das Speicherelement vorzugsweise verwendet wird, um die Messwandler-, Trägheitssensor- oder Bewegungsdetektorablesungen zu speichern.

8. System nach Anspruch 7, wobei der drahtlose Sendeempfänger mit einem oder mehreren des Temperaturdetektors, des Bewegungsdetektors und des Trägheitssensors kommuniziert, die alle mit dem Empfänger kommunizieren, sodass mehrere Kommunikationswege für Datenübertragung offen sind.

9. System nach Anspruch 7 oder 8, wobei der Bewegungsdetektor verwendet wird um zu bestimmen, ob das Schienenfahrzeug in Bewegung ist, und die Analyse der Messwandlerablesungen für statische oder dynamische Bedingungen zu ändern.

10. System nach einem der Ansprüche 7 bis 9, wobei das Rechenelement verwendet wird, um die Rate der Ablesungen zu berechnen, die von dem Temperaturdetektor vorgenommen werden.

11. System nach einem der Ansprüche 6 bis10, wobei das Rechenelement verwendet wird, um die Messwandlerablesungen basierend auf Raten und Temperaturablesungen einzustellen.

12. System nach einem vorstehenden Anspruch, wobei der Empfänger Folgendes umfasst:
eine Datensteuereinheit zum Empfangen von Ablesungen von einem oder mehreren der Sensoren;
ein Kommunikationselement zum Übertragen von Daten an eine ferne Stelle,
ein Rechenelement zum Analysieren der Daten, die von einem oder mehreren der Sensoren empfangen werden;
einen Detektor zum Bestimmen der Geschwindigkeit des Eisenbahnwagens; und ein Positionierungselement zum Bestimmen der Stelle des Eisenbahnwagens.

13. System nach Anspruch 12, wobei die Datensteuereinheit das Rechenelement an den Sensoren programmiert, um die Abtastung der Messwandler und die Rate, mit welcher Ablesungen an den Empfänger zu übertragen sind, zu steuern.

14. System nach einem vorstehenden Anspruch, wobei die Messwandler zum Messen vorübergehender Kräfte verwendet werden, die an einer Grenzfläche zwischen Schiene und Rad auftreten.

## Revendications

1. Système pour mesurer la charge d'un wagon comprenant :
une caisse de wagon supportée sur des roues ferroviaires, des essieux et une pluralité de bogies,
chaque bogie étant composé d'une traverse (1) et de deux longerons (2a, 2b),
une pluralité de transducteurs (8) montés sur la traverse ou les longerons pour mesurer le poids supporté par la caisse de wagon,
une ou plusieurs unités formant capteur (9) associée(s) aux transducteurs (8) pour l'acquisition, le traitement et la transmission de données traitées à partir des transducteurs (8),
un récepteur pour la communication avec les unités formant capteur (9) et la transmission des données traitées indicatives du poids supporté par la caisse de wagon,
dans lequel la pluralité de transducteurs (8) comprend des transducteurs de type contrainte, et dans lequel chaque transducteur de type contrainte (8) est attaché solidement à la traverse (1) ou à un des longerons (2a, 2b) par le biais d'un joint soudé, ou au moyen d'adhésifs.

2. Système selon la revendication 1, dans lequel chaque transducteur de type contrainte (8) inclut un élément élastique (10) qui est joint mécaniquement à un ou plusieurs de la traverse ou des longerons,
dans lequel l'élément élastique multiplie mécaniquement un déplacement d'entrée détecté au niveau des jauges de contrainte.

3. Système selon la revendication 2, dans lequel l'élément élastique (10) est conçu pour fléchir avec l'application d'un déplacement par traction ou compression sur les pattes (11a, 11b) de celui-ci et est agencé pour transmettre la contrainte des pattes (11a, 11b) à une partie de l'élément élastique dans laquelle sont montées les jauges de contrainte (12a, 12b), l'élément élastique (10) étant conçu de telle sorte que le déplacement d'entrée des pattes (11a, 11b) est amplifié mécaniquement à l'emplacement des jauges de contrainte (12a, 12b)

4. Système selon l'une quelconque des revendications 1 2 ou 3, dans lequel chaque transducteur (8) inclut une pluralité de jauges de contrainte agencées de préférence dans un ou plusieurs montages en pont de Wheatsone.

5. Système selon une quelconque revendication précédente, dans lequel les transducteurs sont montés symétriquement le long de la direction latérale ou longitudinale du wagon pour déterminer les déséquilibres de charge statique entre les roues, essieux ou bogies.

6. Système selon une quelconque revendication précédente, dans lequel chaque unité formant capteur (9) est composée de :
un élément de calcul pour recueillir des lectures de transducteurs ;
un élément de stockage en mémoire ; et
un émetteur-récepteur sans fil pour envoyer et recevoir des données.

7. Système selon la revendication 6, dans lequel chaque unité formant capteur (9) comprend en outre :
un détecteur de température pour mesurer la température à l'emplacement de montage des transducteurs ;
un détecteur de mouvement pour l'indication de mouvement du wagon ;
un capteur inertiel pour la détection du mouvement de translation et de rotation statique et dynamique de la traverse et des longerons ;
dans lequel l'élément de calcul est de préférence utilisé pour commander l'échantillonnage des transducteurs et pour réaliser l'analyse sur les lectures de transducteurs ; et
dans lequel l'élément de stockage en mémoire est de préférence utilisé pour stocker les lectures de transducteurs, de capteur inertiel ou de détecteur de mouvement.

8. Système selon la revendication 7, dans lequel l'émetteur-récepteur sans fil communique avec un ou plusieurs du détecteur de température, du détecteur de mouvement et du capteur inertiel, tous communiquant avec le récepteur, de sorte que de multiples voies de communication sont ouvertes pour la transmission de données.

9. Système selon la revendication 7 ou 8, dans lequel le détecteur de mouvement est utilisé pour déterminer si le véhicule ferroviaire est en mouvement ou pour changer l'analyse des lectures de transducteurs pour des conditions statiques ou dynamiques.

10. Système selon l'une quelconque des revendications 7 à 9, dans lequel l'élément de calcul est utilisé pour calculer la fréquence des lectures tirées du détecteur de température.

11. Système selon l'une quelconque des revendications 6 à 10, dans lequel l'élément de calcul est utilisé pour ajuster les lectures de transducteurs sur la base des fréquences et des lectures de température.

12. Système selon une quelconque revendication précédente, dans lequel le récepteur comprend :
une unité de commande de données pour recevoir des lectures d'un ou plusieurs des capteurs ;
un élément de communication pour transmettre des données à un emplacement distant,
un élément de calcul pour analyser les données reçues d'un ou plusieurs des capteurs ;
un détecteur pour déterminer la vitesse du wagon ; et un élément de positionnement pour déterminer l'emplacement du wagon.

13. Système selon la revendication 12, dans lequel l'unité de commande de données programme l'élément de calcul sur les capteurs pour commander l'échantillonnage des transducteurs et la fréquence à laquelle des lectures doivent être transmises au récepteur.

14. Système selon une quelconque revendication précédente, dans lequel les transducteurs sont utilisés pour mesurer des forces transitoires se produisant au niveau d'une interface rail et roue.
